# EUROPÄISCHE PATENTSCHRIFT

(11) **EP 2 672 491 B1**
(45) Veröffentlichungstag und Bekanntmachung des Hinweises auf die Patenterteilung: **29.07.2015**
(21) Anmeldenummer: 12305637.6
(22) Anmeldetag: 06.06.2012
(51) Int. Cl.: H01B 13/14, B29C 47/12

(54) **Kabel mit widerstandsfähig hergestelltem Mantel**
Cable with resistant covering
Câbles avec gaines résistantes

(43) Veröffentlichungstag der Anmeldung: 11.12.2013
(73) Patentinhaber: Nexans, 75008 Paris (FR)
(72) Erfinder: Gonnet, Jean-Marc, 90429 Nürnberg (DE); Haller, Daniel, 91207 Lauf (DE)
(74) Vertreter: Döring, Roger

(56) Entgegenhaltungen:
- JP-A- 59 187 831
- US-A- 2 583 026
- US-A1- 2004 065 979

## Beschreibung

Die vorliegende Erfindung betrifft ein Kabel mit einem mechanisch widerstandsfähigen Mantel, der durch das Herstellungsverfahren eine gute Widerstandsfähigkeit aufweist, sowie das Herstellungsverfahren und eine an das Herstellungsverfahren angepasste Vorrichtung.

Das erfindungsgemäße Kabel zeichnet sich dadurch aus, dass der Mantel, der einschichtig oder mehrschichtig, bevorzugt zweischichtig ist, eine durch das Extrusionsverfahren erzeugte höhere Widerstandsfähigkeit aufweist, als der Mantel eines Kabels, der mit einem herkömmlichen Extrusionsverfahren aus gleichem Material hergestellt ist.

### Stand der Technik

Die EP 2367177 A1 beschreibt eine zur Herstellung von Kabeln geeignete Extruderdüse mit zwei Zuführungskanälen für Kunststoffmassen, die in einen gemeinsamen Zuführungskanal übergehen. Das damit hergestellte Kabel zeichnet sich dadurch aus, dass die innere Masse mit einheitlicher Schichtdicke um Adern anliegt und die äußere Masse die von der inneren Masse abgebildeten Zwickel ausfüllt und einen zylindrischen Außenquerschnitt bildet.

Die US 7,057,113 B1 zeigt ein Kabel, bei dem drei Adern in einem Innenmantel liegen, der die Zwickel zwischen den Adern annähernd nachbildet und von einem Außenmantel umfasst ist, der die Zwickel des Innenmantels durch eine größere Schichtdicke ausfüllt und überhüllt, sodass der Außenmantel sowohl den größten Durchmesser des Innenmantels als auch an dessen Zwickel einen konvexen Querschnitt hat, der über einen zylindrischen Umfang hinausgeht.

Die US 2, 583,026 beschreibt Kabel, die zwischen einem Innen- und einem Außenmantel wendelförmige Nuten aufweisen.

Die US 2004/0065979 A1 zeigt in Figur 22 eine Spitze, durch die ein Kern 50 eines Kabels geführt wird, wobei durch die zwei Kanäle 141, 142 Polymermischungen zugeführt werden. Durch die Rotation der als Extruderschnecke ausgeführten Spitze werden die beiden Polymermischungen durchmischt.

### Aufgabe der Erfindung

Der Erfindung stellt sich die Aufgabe, ein Kabel mit einem einschichtigen oder mehrschichtigen Mantel bereitzustellen, der eine höhere Festigkeit aufweist, insbesondere eine hohe Festigkeit des Mantels gegen Reißen entlang der Längsachse und besonders bevorzugt eine längs des Kabels verlaufende Fließnaht vermeidet. Insbesondere bei einem Mantel aus zwei oder mehr Schichten soll das Kabel eine innige Verbindung der beiden oder mehreren Mantelschichten aufweisen. Eine weitere Aufgabe liegt in der Bereitstellung eines alternativen Verfahrens zur Herstellung des Kabels und einer alternativen Vorrichtung, mit der das Herstellungsverfahren durchführbar ist.

### Allgemeine Beschreibung der Erfindung

Die Erfindung löst die Aufgabe mit den Merkmalen der Ansprüche und insbesondere mit einem Kabel, das zumindest eine Ader, vorzugsweise zumindest zwei, zumindest drei oder mehr Adern aufweist, die insbesondere aus isolierten Leitern bestehen, die von einem insbesondere außenliegenden Mantel umfasst sind, der einschichtig oder mehrschichtig ist, insbesondere zweischichtig aus einer Außenschicht und einer Innenschicht, wobei zwischen dem Mantel und den Adern ein Innenmantel, eine Schirmung und/oder Wicklung angeordnet sein kann, wobei optional der Mantel mit seiner Innenschicht unmittelbar an den Innenmantel, die Schirmung und/oder Wicklung angrenzt. Das erfindungsgemäße Kabel zeichnet sich bevorzugt dadurch aus, dass die Polymermischungen des Mantels und/oder die Fließnaht im Mantel gerichtet in einem Winkel zur Längsmittelebene des Kabels angeordnet sind, die sich von der Längsachse des Kabels erstreckt, und insbesondere eine Fließnaht in einem Winkel zur Längsachse des Kabels angeordnet ist. Der Winkel beträgt >1° bis 89°, insbesondere von 5° bis 85° zur Längsmittelebene betragen, bevorzugt 20° bis 70°, bevorzugter 30° bis 60°. Besonders bevorzugt ist der Mantel aus einer Schicht oder aus zumindest zwei Schichten und/oder die Fließnaht spiralförmig zur Längsmittelebene des Kabels angeordnet. Für die Zwecke der Erfindung ist ein Winkel zur Längsmittelebene ein bei Projektion auf die Längsachse zu bestimmender Winkel, der daher in Bezug auf die Längsmittelebene bestimmt ist. Mit Bezug auf eine Düse liegt der Winkel z.B. zusätzlich zu einer optionalen Neigung des Leitelements in Richtung auf die Längsachse vor und bezeichnet insbesondere den Winkel, in dem ein Leitelement entlang des Radius zur Längsachse bzw. zur Längsmittelebene angeordnet ist, wobei der Radius insbesondere der Innen- oder Außenradius des Kanals der Düse ist, in dem die den Mantel bildenden Polymermischungen geführt werden. In Ausführungsformen, in denen der Mantel zumindest eine Innenschicht und eine unterscheidbare Außenschicht aufweist, zeichnet sich das Kabel dadurch aus, dass der Radius der Grenzfläche parallel zur Längsachse des Kabels zwischen einem radialen Minimum und einem radialen Maximum alternierend angeordnet ist und sich Maximum und/oder Minimum entlang der Längsachse in einem Winkel zur Längsachse erstrecken. Der Mantel kann aus einer Polymermischung bestehen und einschichtig sein, oder aus einer Außenschicht und einer Innenschicht bestehen, alternativ eine Außenschicht und eine Innenschicht mit zwischen diesen angeordneten einen Zwischenschicht oder zumindest zwei Zwischenschichten aufweisen oder daraus bestehen. Die Zwischenschicht kann mit der Innenschicht und/oder mit der Außenschicht stoffschlüssig verbunden sein oder ausschließlich durch Formschluß mit der Innenschicht und/oder mit der Außenschicht stoffschlüssig verbunden sein, d.h. ohne Stoffschluß.

Die Anordnung der einen Schicht oder der zumindest zwei Schichten des Mantels und/oder der Fließnaht in einem Winkel >1°, z.B. > 5° zur Längsmittelebene, bevorzugt spiralförmig zur Längsmittelebene bzw. spiralförmig um die Längsachse des Kabels, ergibt eine höhere Festigkeit des Mantels, insbesondere gegen ein Reißen des Mantels entlang der Längsmittelebene, insbesondere gegen das Reißen entlang der Fließnaht.

In der bevorzugten Ausführungsform weist der Mantel eine Außenschicht und eine Innenschicht auf oder besteht daraus, die entlang einer Grenzfläche einander gegenüber liegen, bzw. an welcher die Außenschicht die Innenschicht kontaktiert. Die Außenschicht und die Innenschicht können aus verschiedenen Polymermischungen oder aus derselben Polymermischung bestehen. Die Außenschicht kann stoffschlüssig mit der Innenschicht verbunden sein, insbesondere wenn die Polymermischungen der Außenschicht und die Polymermischung der Innenschicht kompatible Polymerbestandteile, insbesondere denselben Polymerbestandteil aufweisen und insbesondere aus bis auf unterschiedliche Farbstoffe gleichen Polymermischungen bestehen. Alternativ können Außenschicht und Innenschicht nur durch Formschluss miteinander verbunden sein und keine stoffschlüssige Verbindung aufweisen, z.B. aus nicht aneinander klebenden Polymermischungen bestehen. Daher kann die Außenschicht ausschließlich durch Kraftschluß mit der Innenschicht verbunden sein, wobei zwischen Innen- und Außenschicht eine Zwischenschicht angeordnet ist, oder die Innenschicht unmittelbar an die Außenschicht angrenzt.

Bevorzugt überlappt die Innenschicht entlang der Grenzfläche abschnittsweise die Außenschicht, sodass der Mantel Abschnitte aufweist, in denen Außenschicht und Innenschicht einander zumindest zweimal überlappen, bzw. dass der Mantel Abschnitte aufweist, in denen die Grenzfläche radiale Hinterschneidungen aufweist.

Die Orientierung der Polymermischungen von Außenschicht und Innenschicht in einem Winkel zur Längsmittelebene des Kabels wird bei Mänteln mit einer Außenschicht und einer Innenschicht aus unterschiedlich eingefärbten und ansonsten gleichen oder verschiedenen Polymermischungen deutlich. So weisen erfindungsgemäße Mäntel eine teilweise Einmischung der Außenschicht über die Grenzfläche hinweg in die Innenschicht auf, oder eine Einmischung der Innenschicht über die Grenzfläche in die Außenschicht, so dass die Schichten des Mantels durch die Grenzfläche hindurch in kleinen radialen Bereichen ineinander ragen und über die Grenzfläche hinaus miteinander verzahnt oder vermischt sind.

Die Orientierung der Polymermischung eines einschichtigen Mantels bzw. der Polymere von Außenschicht und Innenschicht in einem Winkel zur Längsmittelebene, insbesondere spiralförmig zur Längsmittelebene oder zur Längsachse des Kabels, wird im Querschnitt und/oder im Längsschnitt durch den Mantel deutlich, insbesondere sichtbar gemacht durch unterschiedliche Einfärbung von Außenschicht und Innenschicht, anhand des Eindringens der Außenschicht in die Innenschicht bzw. anhand des Eindringens der Innenschicht in die Außenschicht in kleinen radialen Bereichen und optional anhand der radialen Hinterschneidungen, die die Grenzfläche zwischen Außenschicht und Innenschicht aufweist. Entsprechend ist der Mantel des Kabels bevorzugt spiralförmig extrudiert und weist insbesondere bei einem Mantel mit einer Innenschicht und einer Außenschicht einen an die Außenfläche angrenzenden radialen Bereich des Querschnitts aus Polymermischung der Außenschicht auf und einen an die Innenfläche angrenzenden radialen Bereich des Querschnitts aus Polymermischung der Innenschicht, wobei der Radius der Grenzfläche radial zwischen einem radialen Minimum und einem radialen Maximum alternierend angeordnet ist, wobei vorzugsweise das radiale Minimum und das radiale Maximum längs des Kabels in einem Winkel gegen die Längsmittelebene des Kabels angeordnet sind, insbesondere spiralförmig um die Längsachse umlaufend.

Bei einem Mantel mit oder aus einer Außenschicht und einer Innenschicht, die aus unterschiedlichen Polymermischungen bestehen, die sich beispielsweise nur durch einen Farbstoff unterscheiden und im Übrigen dieselben Bestandteile aufweisen, vorzugsweise in denselben Masseanteilen, erstreckt sich die Grenzfläche in einem Radius, der zwischen einem radialen Minimum und einem radialen Maximum alternierend angeordnet ist, wobei vorzugsweise das radiale Minimum und das radiale Maximum längs des Kabels in einem Winkel gegen die Längsmittelebene des Kabels angeordnet sind, insbesondere spiralförmig um die Längsachse umlaufend. Bevorzugt erstreckt sich die Grenzfläche mit einem Querschnitt, der entlang des Radius periodisch bzw. regelmäßig beabstandete Abschnitte aufweist, in denen die Grenzfläche über und/oder unter einen kreisförmigen Querschnitt ragt, beispielsweise mit einem sägezahnförmigen, abschnittsweise bogenförmigen, zahnförmigen oder sichelförmigen Querschnitt.

Die Abschnitte des Querschnitts der Grenzfläche sind bevorzugt symmetrisch zur Längsmittelebene des Kabels angeordnet. Die äußere Oberfläche des Mantels, die bei einem Mantel mit einer Außen- und einer Innenschicht die Außenschicht bildet, ist vorzugsweise zylindrisch. Weiter bevorzugt ist die Innenseite des Mantels, die bei einem Mantel mit einer Innenschicht von der Innenseite der Innenschicht gebildet ist, zylindrisch und liegt beispielsweise auf einem Innenmantel auf, der die Adern umgibt. Die äußere Oberfläche des Mantels bestimmt mit der ihr gegenüberliegenden inneren Oberfläche des Mantels die Gesamtdicke des Mantels, die bevorzugt bei gleicher Festigkeit, insbesondere gegen Reißen längs der Längsmittelebene des Kabels, geringer sein kann als z.B. bei einem herkömmlichen Kabel, bei dem der Mantel ein- oder mehrschichtig ist und einen parallel zur Längsachse extrudierten Mantel, insbesondere eine Orientierung der Fließnaht im Wesentlichen längs der Längsachse des Kabels aufweist.

Generell bezeichnen Schritte, die das Herstellungsverfahren aufweist, die Einrichtung der Extruderdüse für diese Schritte und die Eigenschaften der Extruderdüse bezeichnen die dadurch bestimmten Eigenschaften des Herstellungsverfahrens.

Das erfindungsgemäße Herstellungsverfahren, insbesondere unter Verwendung einer erfindungsgemäßen Extruderdüse, sieht die Zuführung zumindest einer Masse in einem Kanal mit ringförmigem Querschnitt vor, der sich in einem Abschnitt von einem Einlass bis zu einem Auslass angrenzend an die Spitzenöffnung einer Spitze verjüngt, in welcher koaxial eine Führungsbohrung angeordnet ist. In einem Abstand von der Spitzenöffnung, über den sich der Querschnitt des Kanals erstreckt, ist eine Auslassöffnung mit vorzugsweise zylindrischem Querschnitt angeordnet, durch die die Außenfläche des Mantels um die durch die Führungsbohrung zugeführten Elemente des Kabels, insbesondere dessen Adern geformt wird. Generell kann als Längsmittelebene der Düse die Längsmittelebene der Führungsbohrung bezeichnet werden, die sich senkrecht zur Längsachse der Führungsbohrung erstreckt und/oder die Längsmittelebene zu der Achse, um die sich der Kanal in einem Abstand erstreckt, der sich zu dessen Auslass an der Spitzenöffnung verringert. Da bei Verwendung der Düse bzw. beim Herstellungsverfahren die Längsachse der Zuführungsbohrung auch die Längsachse des Kabels bildet, kann vorliegend die Längsachse bzw. Längsmittelebene der Düse bzw. der Zuführungsbohrung die Längsachse bzw. Längsmittelebene des Kabels sein, bzw. durch diese ersetzt werden.

Erfindungsgemäß wird zumindest eine Polymermischung für den Mantel, vorzugsweise eine Polymermischung für die Innenschicht und darauf konzentrisch angeordnet eine Polymermischung für die Außenschicht, entlang des sich verjüngenden Kanals in einem Abschnitt in einem Winkel zur Längsmittelebene der Führungsbohrung geführt, insbesondere in eine spiralförmige Drehung versetzt. Bevorzugt ist dieser Abschnitt ein zweiter Abschnitt, der an einen ersten Abschnitt angrenzt, der sich bis zur Spitzenöffnung erstreckt, und gegenüberliegend an einen dritten Abschnitt angrenzt, der optional einen konstanten Durchmesser aufweist und sich nicht verjüngt oder an einen Kanalabschnitt mit konstantem Durchmesser angrenzt. Dabei führen der erste Abschnitt und der dritte Abschnitt, zwischen denen der zweite Abschnitt angeordnet ist, die Polymermischungen zwischen ebenen Oberflächen im Wesentlichen parallel zur Längsmittelebene der Führungsbohrung und üben beispielsweise keinen Einfluss auf die Geschwindigkeit der Strömung in radialer Richtung mit Ausnahme der Verringerung des Durchmessers auf die Auslassöffnung aus, zu der sich der Kanal verjüngt. Alternativ kann der zweite Abschnitt einen konstanten Innendurchmesser und einen konstanten Außendurchmesser aufweisen, wobei sich bevorzugt der an den zweiten Abschnitt angrenzende erste Abschnitt zur Spitzenöffnung verjüngt. Durch die Führung der Polymermischung in einem Abschnitt, insbesondere im zweiten Abschnitt, des sich verjüngenden Kanals in einem Winkel zur Längsmittelebene der Führungsbohrung, zu der der sich verjüngende Abschnitt des Kanals koaxial liegt, führt zu einer Orientierung der Polymermoleküle und bevorzugt der Fließnaht des Mantels in einem Winkel zur Längsmittelebene des Kabels, besonders bevorzugt zu einer spiralförmigen Anordnung von Bestandteilen der Polymermischungen, die insbesondere als längs des Kabels spiralförmige Anordnung der Grenzfläche zwischen unterscheidbaren Schichten des Mantels sichtbar ist und der Fließnaht um die Längsmittelebene des Kabels. Diese Anordnung von Bestandteilen der einen oder mehreren Polymermischungen, die den Mantel bilden, wird auch nach Durchführung durch die zylindrische Auslassöffnung der Düse beibehalten.

Ein Kabel mit einem Mantel mit oder aus einer Innenschicht und einer Außenschicht, zwischen denen eine Grenzfläche gebildet ist, deren Radius radial zwischen einem radialen Minimum und einem radialen Maximum alternierend angeordnet ist und sich Maximum und/oder Minimum parallel zur Längsachse erstrecken, kann durch ein Extrusionsverfahren mit einer Düse herstellt werden, bei der zumindest ein Leitelement, bevorzugt zur Längsachse symmetrisch um den Radius verteilte Leitelemente im Kanal, insbesondere in dessen zweiten Abschnitt, angeordnet sind, die jeweils in einer Längsmittelebene oder parallel zu einer Längsmittelebene der Düse angeordnet sind. Diese Anordnung von Leitelementen, insbesondere in regelmäßig zueinander geneigten Längsmittelebenen, ergibt eine Anordnung der Außenschicht und der Innenschicht mit einer Grenzfläche, deren Radius radial zwischen einem radialen Minimum und einem radialen Maximum alternierend angeordnet ist. Dies wird gegenwärtig darauf zurückgeführt, dass die Leitelemente eine entsprechende Formung der einen oder mehrerer Polymermischungen des Mantels gegeneinander bewirken, wobei diese Formung, die anhand der Grenzschicht eines Mantels mit einer Innenschicht und einer Außenschicht sichtbar ist, auch bei einschichtigen Mänteln auftritt. Beim Herstellungsverfahren wird die Innenfläche des Mantels durch Kontakt mit den an den Mantel angrenzenden Elementen des Kabels, z.B. mit dem Innenmantel, einer Schirmung oder einer Wicklung und die Außenfläche des Mantels durch die Düsenöffnung der Düse geformt.

Bevorzugt werden die Polymermischungen des Mantels über ihre vollständige Dicke, d.h. über den vollständigen Querschnitt des sich verjüngenden Kanals, in einem Winkel zur Längsmittelebene der Führungsbohrung bewegt, beispielsweise um zumindest 1°, bevorzugt um zumindest 5°, zumindest 30°, zumindest 90°, bevorzugter um zumindest 180° zur Längsmittelebene, optional um zumindest einen oder mehrere vollständige Umläufe, die insbesondere spiralförmig sind, um die Längsachse bewegt.

Die erfindungsgemäße Extruderdüse, die zur Verwendung für das Herstellungsverfahren angepasst ist, weist einen Kanal auf, der an einem Einlass zumindest eine Zulauföffnung für eine Polymermischung, vorzugsweise zwei oder mehr beabstandete Zulauföffnungen für jeweils eine Polymermischung aufweist und sich vom Einlass zu einem Auslass verjüngt, der an die Spitzenöffnung eines Zuführungskanals angrenzt. Die radiale Erstreckung oder die Querschnittsfläche des Kanals kann sich von seinem Einlass zu seinem Auslass verringern, vergrößern oder bevorzugter Weise konstant bleiben.

Der Führungskanal dient zur Führung von innerhalb des Mantels liegenden Elementen des Kabels, insbesondere von Adern, die optional von weiteren Elementen z.B. Innenmantel, Schirmung und/oder Wicklung umgeben sind und liegt vorzugsweise koaxial zum Kanal und dessen Auslass. Der Kanal weist vorzugsweise einen generell ringförmigen Querschnitt auf, dessen Betrag sich zu seinem Auslass verringern kann, gleich bleiben oder sich vergrößern kann.

Die erfindungsgemäße Extruderdüse zeichnet sich dadurch aus, dass der Kanal, der von einer Innenfläche und einer beabstandeten gegenüberliegenden Außenfläche begrenzt wird, zumindest einen Abschnitt aufweist, der zumindest ein Leitelement aufweist, das in einem Winkel zur Längsmittelebene der Führungsbohrung angeordnet ist, insbesondere um zumindest 1°, bevorzugt um zumindest 5°, bevorzugter um zumindest 30°, optional um zumindest einen Anteil von z.B. 5° bis 360°, bevorzugt 10° bis 60° eines vollständigen Umlaufs von 360° um die Längsachse der Düse. Der Abschnitt des Kanals, über den sich axial das zumindest eine Leitelement erstreckt, kann sich verjüngen, z.B. eine Innenfläche und eine Außenfläche mit sich auf den Auslass verringerndem Radius aufweisen. Alternativ kann der Abschnitt des Kanals, über den sich axial das zumindest eine Leitelement erstreckt, einen konstanten Radius aufweisen, z.B. eine Innenfläche und eine Außenfläche mit konstantem Radius aufweisen. Das zumindest eine Leitelement kann ein Steg und/oder eine Nut sein. Das zumindest eine Leitelement kann auf der Innenfläche des Kanals angeordnet sein, z.B. auf der Spitze, die den Innenradius des Kanals begrenzt und in welcher optional die Führungsbohrung angeordnet ist. Alternativ oder zusätzlich zu dem zumindest einen Leitelement auf der Innenfläche des Kanals kann das zumindest eine Leitelement auf der Außenfläche des Kanals angeordnet sein, z.B. an der Wandung der Düse, die der Innenfläche des Kanals in einem Abstand gegenüberliegt. Das Leitelement kann sich anteilig oder vollständig über den Querschnitt des Kanals erstrecken, z.B. einen Steg aufweisen, der sich von der Innenfläche bis zur Außenfläche des Kanals erstreckt. Optional weist das Leitelement entlang der Längsachse zumindest zwei, insbesondere zumindest 2 oder zumindest 4 beabstandete Bereiche auf, die vom Einlass zum Auslass den Querschnitt des Kanals in zunehmendem Anteil oder in abnehmendem Anteil überdecken und/oder Nuten, die Einlass zum Auslass des Kanals eine abnehmende oder eine zunehmende Tiefe aufweisen. Ein Steg oder entlang der Längsachse beabstandete Bereiche eines Stegs oder mehrerer Stege können sich über einen Anteil von 5 bis 100%, von 5 bis 95%, bevorzugt von 10 bis 90%, bevorzugter von 30 bis 60% des Querschnitts über den Querschnitt des Kanals erstrecken. In Ausführungsformen, in denen das Leitelement alternativ oder zusätzlich zu einem in einem Winkel zur Längsmittelebene der Düse angeordneten Steg eine in einem Winkel zur Längsmittelebene der Düse angeordnete Nut aufweist, kann die Nut eine Tiefe von 5 bis 100%, bevorzugt von 10 bis 90%, bevorzugter von 30 bis 60% des Querschnitts des Kanals aufweisen. Mit Bezug auf die Erstreckung des Leitelements zum Querschnitt des Kanals wird dessen Querschnitt z.B. in einem axial unmittelbar angrenzenden Bereich oder in einem an den das Leitelement aufweisenden zweiten Abschnitt angrenzenden ersten und/oder dritten Abschnitt bestimmt oder als Querschnitt über Nuten, insbesondere als mittlerer Abstand über einen axialen Bereich von z.B. 1 bis 10mm zwischen dessen Innen- und Außenfläche.

Generell kann die Spitze einstückig oder zweiteilig sein, z.B. einen in einem Spitzenteil gehaltenen Einsatz aufweisen, so dass die Innenfläche des Kanals abschnittsweise von einem Spitzenteil und angrenzend abschnittsweise von dessen Einsatz gebildet wird.

Ein als Steg ausgebildetes Leitelement weist vorzugsweise einen Abstand zur gegenüberliegenden Wand des Kanals auf, der zumindest 5%, bevorzugt zumindest 10%, bevorzugter zumindest 30% des Kanalquerschnitts ist. In dieser Ausführungsform erstreckt sich das Leitelement bevorzugt von der Innenwand des Kanals und endet in einem Abstand zur Außenwand des Kanals. Ausführungsformen, in denen ein als Steg ausgebildetes Leitelement in einem Abstand zu einer Wand des Kanals angeordnet ist, sind besonders für Herstellungsverfahren für Kabel mit einem Mantel mit oder aus zumindest zwei Schichten oder drei Schichten geeignet, bei denen sich die Grenzfläche zwischen den Schichten bis in einen Abstand von der Außenfläche und/oder von der Innenfläche von zumindest 5%, bevorzugter zumindest 10%, bevorzugter zumindest 30% des Mantelquerschnitts erstreckt. Bei Erstreckung des Leitelements von der Innenfläche des Kanals bis in einen Abstand zur Außenfläche des Kanals ist die Düse insbesondere zur Verwendung bei der Herstellung von Kabeln mit einem Mantel geeignet, dessen Außenschicht sich über zumindest 5%, bevorzugt zumindest 10%, bevorzugter zumindest 30% des Mantelquerschnitts bis in eine Grenzfläche mit der Innenschicht erstreckt, wobei bevorzugt zusätzlich die Polymermischung des Außenmantels über die Grenzfläche hinaus in die Innenschicht eingemischt ist.

Bevorzugt weist das Leitelement im axialen Querschnitt bogenförmige Kantenbereiche auf, z.B. bogenförmige Querschnitte des Fuß- und des Kopfbereichs von Stegen bzw. Nuten.

Beim Herstellungsverfahren wird die zumindest eine Polymermischung, die den Mantel bildet, zumindest in einer anteiligen Schichtdicke in einem Winkel zur Längsmittelebene der Düse geführt und ergibt zumindest in dieser anteiligen Schichtdicke eine Ausrichtung der Mantelmischung in diesem Winkel zur Längsmittelebene des Kabels, da die Adern koaxial zur Längsachse der Düse, insbesondere koaxial zu der Zuführungsbohrung geführt werden, die auch die Längsachse des Kanals bildet. Dabei ist die anteilige Schichtdicke der Anteil des Mantelquerschnitts, der gleich dem Anteil des Querschnitts des Kanals ist, über den sich das zumindest eine Leitelement erstreckt. Bevorzugt wird die zumindest eine Polymermischung in dem Anteil in einem Winkel zur Längsmittelebene des Kanals geführt, der an die Wand des Kanals mit kleinerem Radius angrenzt, dadurch, dass das zumindest einen Leitelement an dieser Wand angeordnet ist und insbesondere als Steg in den lichten Querschnitt des Kanals ragt, z.B. zu zumindest 50% oder bis zumindest 90 oder 95% des Querschnitts.

Bevorzugt ist das zumindest eine Leitelement in einem zweiten Abschnitt des Kanals angeordnet, der an einen ersten Abschnitt angrenzt, der sich bis zum Auslass angrenzend an die Spitzenöffnung erstreckt, und gegenüberliegend an einen dritten Abschnitt angrenzt, der sich bis zum Einlass des Kanals erstreckt.

### Genaue Beschreibung der Erfindung

Die Erfindung wird nun genauer mit Bezug auf die Figuren beschrieben, die
- in Figuren 1 bis 6 Querschnitte erfindungsgemäßer Mäntel von Kabeln zeigen,
- in Figur 7 einen Schnitt durch einen Mantel eines erfindungsgemäßen Kabels gemäß Figur 6 längs zu dessen Längsmittelebene,
- in Figur 8 schematisch den Verlauf der Fließnaht innerhalb des Mantels aus Sicht entlang der Achse des Kabels,
- in Figur 9 schematisch eine erfindungsgemäße Extruderdüse im Längsschnitt und
- in Figur 10 schematisch eine weitere erfindungsgemäße Extruderdüse abschnittsweise im Längsschnitt zeigen.

Gleiche Bezugsziffern bezeichnen funktionsgleiche Elemente.

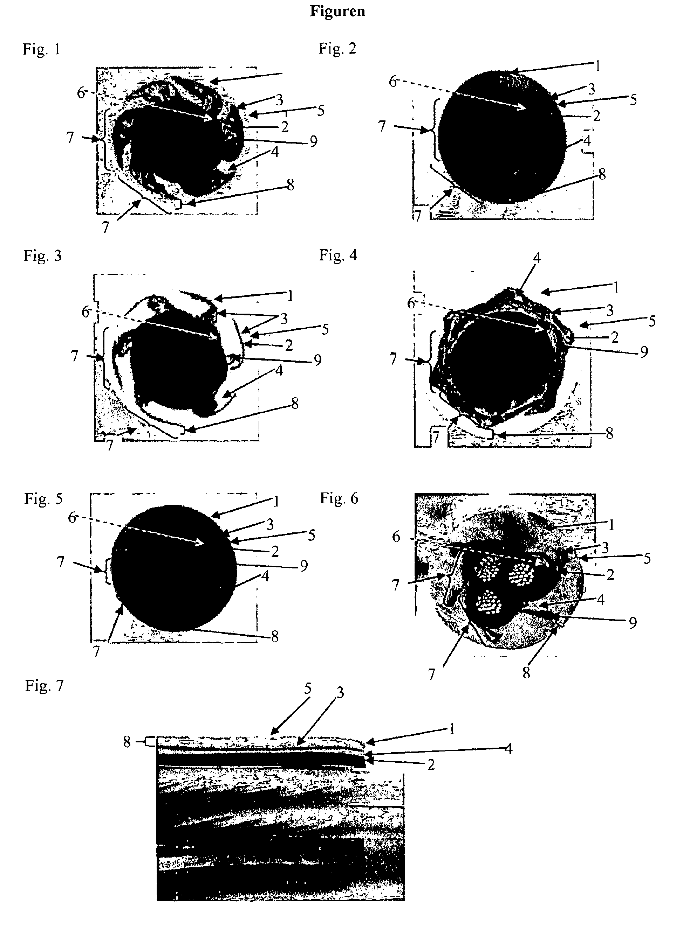

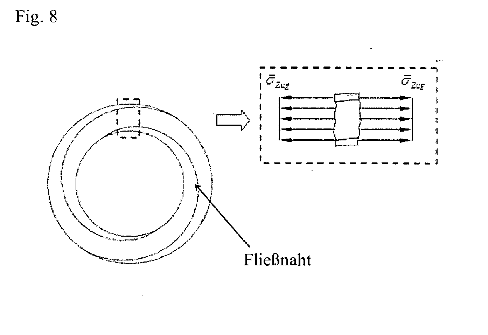

Die in den Figuren 1 bis 5 gezeigten Querschnitte von Mänteln machen anhand von Mänteln mit optisch unterscheidbarer Innenschicht 2 und darauf aufliegender Außenschicht 1 deutlich, dass bei die Grenzfläche 3 zwischen Innen- und Außenschicht 2, 1 von der üblichen zylindrischen Grenzfläche abweicht und vielmehr die Grenzfläche zwischen Innen- und Außenschicht radial zwischen einem radialen Minimum und einem radialen Maximum alterniert. In Figuren 1 bis 5 liegt die Längsmittelebene des Kabels senkrecht zur Darstellungsebene. Die Außenschicht 1 und die Innenschicht 2 der gezeigten Mäntel besteht aus derselben Polymermischung auf Basis von PVC mit jeweils anderem Farbstoff. Die in Figuren 1 bis 3 gezeigten Querschnitte zeigen Hinterschneidungen 4 zwischen Innenschicht 2 und Außenschicht 1. Die Außenfläche 5 und die Innenfläche 6 sind generell zylindrisch und begrenzen einen Mantel mit im Wesentlichen ringförmigen Querschnitt, in dem z.B. eine Innenschicht mit zylindrischem Außenquerschnitt angeordnet ist, der die elektrischen Adern umfasst. Die Grenzfläche 3 weist periodisch entlang des Radius angeordnete Abschnitte 7 auf, in denen die Außenschicht 1 und die Innenschicht 2 wellen- oder zackenförmig ineinander ragen. In den gezeigten Ausführungsformen weist die Außenschicht 1 einen an die Außenfläche 5 angrenzenden Bereich mit ringförmigem Querschnitt 8 auf, der aus der Polymermasse der Außenschicht besteht. Die Polymermasse der Innenschicht 2 weist bereichsweise Einmischungen 9 von Polymermasse der Außenschicht 1 auf. Die gezeigten Ausführungsformen wurden mit einer Extruderdüse gemäß Figur 8 hergestellt, die in dem sich verjüngenden Abschnitt des Kanals auf der Oberfläche der Spitze, die die Wand des Kanals mit kleinerem Radius bildete, 6 periodisch um den Radius angeordnete Leitelemente aufwies. Die Leitelemente wiesen Stege auf, die in einem Abstand von der der Spitze gegenüberliegenden Wand des Kanals endeten. Es hat sich gezeigt, dass der Abstand der als Stege ausgebildeten Leitelemente die Dicke der randständigen Schicht des Mantels bestimmt, z.B. den ringförmigen Querschnitt 8 aus Polymermasse der Außenschicht 1 bei einem Abstand der Stege von der Wand des Kanals, die der Spitze gegenüberliegt.

Die Mäntel, deren Querschnitte in Figuren 1 bis 3 gezeigt sind, wurden mit derselben Extruderdüse hergestellt, wobei das Zuführverhältnis von Polymermischung der Innenschicht 2 zu Polymermischung der Außenschicht 1 in Fig. 1 zu 0,86, in Fig. 2 zu 0,55 und in Fig. 3 zu 0,27 eingestellt war. Diese Beispiele zeigen, dass die erfindungsgemäße Extruderdüse ein Herstellungsverfahren ermöglicht, mit dem das Ausmaß der Hinterschneidung 4 der Außenschicht 1 mit der Innenschicht 2 durch Einstellung des Zuführverhältnisses der Massen der Polymermischungen von Außen- und Innenschicht 2, 1 bestimmt wird. Der Querschnitt der Grenzfläche 3 kann auch als sägezahnförmig oder sichelförmig bezeichnet werden. Der Mantel, dessen Querschnitt in Figur 4 gezeigt ist, wurde mit derselben Düse hergestellt, wie die Mäntel von Figuren 1 bis 3, wobei der Querschnitt des Kanals größer eingestellt war. Dieses Beispiel zeigt, dass der Querschnitt der Grenzfläche 3 durch den Querschnitt des sich zur Düsenspitze verjüngenden Kanals bestimmt wird, in dem Leitelemente in einem Winkel zur Längsmittelebene angeordnet sind.

Der Mantel, dessen Querschnitt in Figur 5 gezeigt ist, wurde mit einer Düse hergestellt, bei der die Leitelemente von 10 Paaren von Nuten und Stegen gebildet wurden, die überdies axial breiter waren als die 6 Paare von Nuten und Stege der Düse, die für die Herstellung der Mäntel von Figuren 1 bis 4 verwendet wurde. Dieses Beispiel zeigt, dass die Anzahl der periodisch um den Radius angeordneten, sich wiederholenden Bereiche 7 des Querschnitts der Grenzfläche gleich der Anzahl der Nuten bzw. der Stege zwischen den Nuten sein kann, die die Leitelemente bilden, wobei Form der sich wiederholenden Bereiche 7 des Querschnitts der Grenzfläche zumindest teilweise durch die axiale Breite der Leitelemente bestimmt wird. Der in Fig. 5 gezeigte Mantel hat einen Querschnitt mit sich axial wiederholenden Bereichen 7, die einen Abschnitt parallel zur Außenfläche 5 mit anschließendem V-förmigem Abschnitt umfassen, der auch als zahnförmig bezeichnet werden kann.

Figur 6 zeigt ein erfindungsgemäßes Kabel aus drei Adern und einem darauf aufliegenden Mantel aus einer Innen- und einer Außenschicht, deren Grenzfläche radial zwischen einem radialen Minimum und einem radialen Maximum alterniert, wobei die Minima und Maxima spiralförmig längs des Kabels angeordnet sind. Die Grenzfläche weist ein sichelförmiges Profil auf, das sich bis an die Adern erstrecken kann. Die Innenfläche des Mantels kann, wie vorliegend gezeigt, generell aus alternierenden Abschnitten aus Polymermischung der Innenschicht und Polymermischung der Außenschicht bestehen, z.B. wenn wie hier gezeigt die Innenschicht anteilig oder vollständig innerhalb sichelförmiger Querschnittsanteile in der Außenschicht angeordnet sind. Dabei weist die Außenschicht wie generell bevorzugt einen an ihre Außenfläche angrenzenden ringförmigen Querschnittsanteil auf, der aus der Polymermischung der Außenschicht besteht.

In Figur 7 liegt die Längsmittelebene des Kabels in der Darstellungsebene. Der gezeigte Längsschnitt durch einen Mantel eines erfindungsgemäßen Kabels zeigt die Schnittfläche eines unmittelbar 3 Adern umfassenden Mantels aus einer dunklen Innenschicht und einer hellen Außenschicht. Die Grenzfläche weist Hinterschneidungen auf, die im Längsschnitt durch den Mantel als Streifen von dunkler Polymermischung der Innenschicht innerhalb der hellen Außenschicht sichtbar sind.

Figur 8 zeigt schematisch den spiralförmigen Verlauf der Fließnaht im Mantel eines erfindungsgemäßen Kabels.

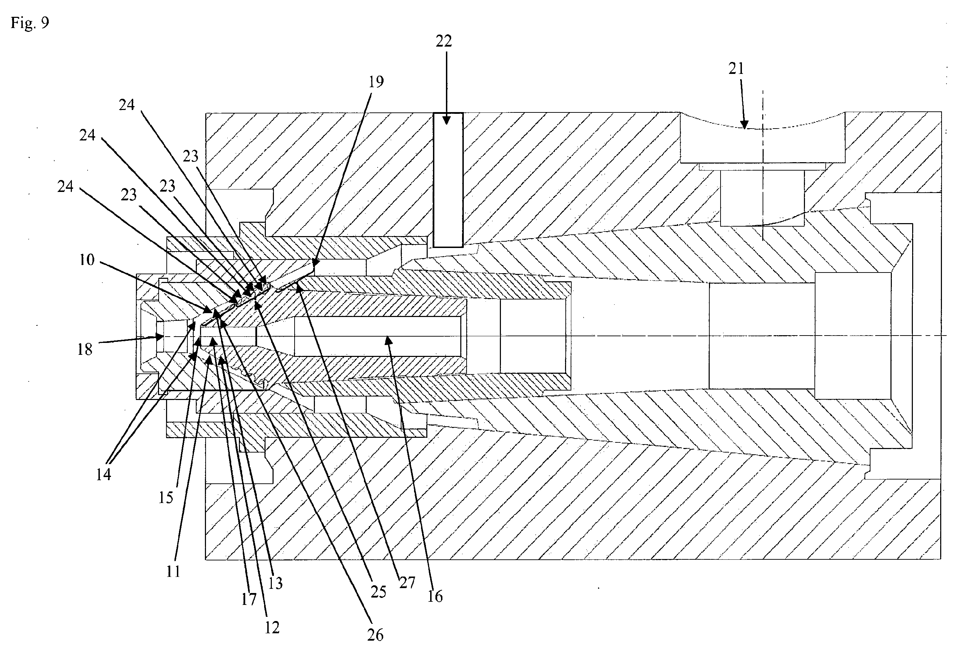

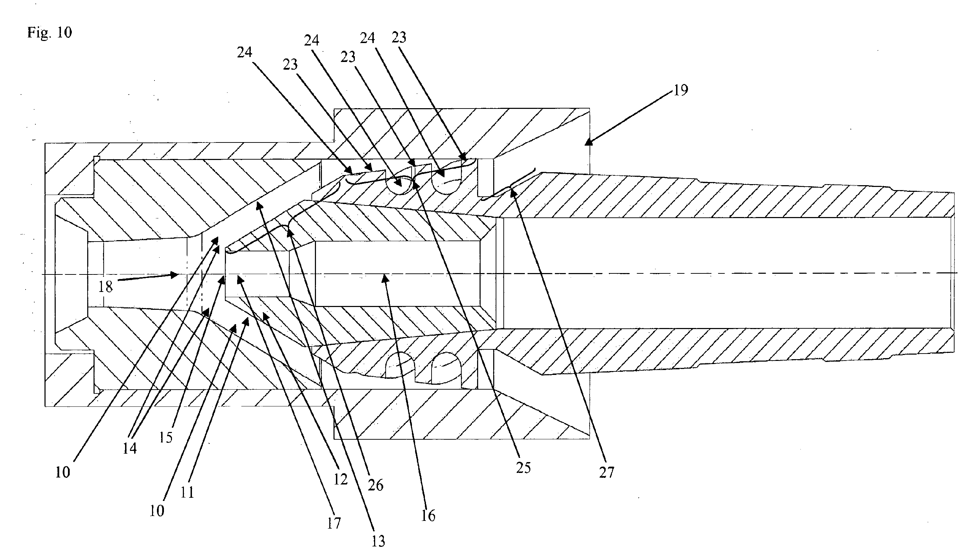

Figur 9 zeigt wie auch Figur 10 eine Extruderdüse mit einem Kanal 10 mit ringförmigem Querschnitt, dessen eine Wand von der kegelförmigen Oberfläche 11 der Spitze 12 gebildet wird und dessen beabstandete, gegenüber liegende Innenfläche 13 von der Innenseite der Düse gebildet wird. Der Kanal 10 mündet in einem Auslass 14, der an die Spitzenöffnung 15 der Spitze 12 angrenzt. Die Längsachse 16 der Führungsbohrung 17 bildet entsprechend der bevorzugten Ausführung die Längsachse 16 des Kanals 10. Die Längsmittelebene erstreckt sich von der Längsachse 16 und kann in der Darstellungsebene liegen. Die Führungsbohrung 17 mündet in der Spitzenöffnung 15. Die Düsenöffnung 18 ist von der Spitzenöffnung 15 um den Auslass 14 beabstandet. Das dem Auslass 14 gegenüberliegende Ende des Kanals 10 wird von einem Einlass 19 gebildet, der wie bevorzugt mit einer Zuleitung 20 für eine Polymermischung oder zumindest 2 konzentrisch angeordnete Polymermassen verbunden ist. Die Zuleitung 20 weist z.B. wie dargestellt angrenzend an den Einlass 19 des Kanals 10 einen ringförmigen Querschnitt mit konstantem Durchmesser auf. Die Zuleitung 20 ist mit zumindest einer ersten Einlassöffnung 21 für eine Polymermischung, die einen einschichtigen Mantel oder die Innenschicht eines zweischichtigen Mantels bildet, und bevorzugt zusätzlich mit einer zweiten Einlassöffnung 22 für eine weitere Polymermischung versehen, die z.B. die Außenschicht eines zweischichtigen Mantels bildet.

Erfindungsgemäß weist der Kanal zumindest ein Leitelement auf, z.B. einen Steg 23 und/oder eine Nut 24, das in einem Winkel zur Längsmittelebene angeordnet ist, die durch die Längsachse 16 verläuft. Entsprechend der bevorzugten Ausführung sind die Leitelemente, z.B. Steg 23 und Nut 24 auf der Oberfläche der Spitze 12 angeordnet, während die gegenüberliegende Wand des Kanals 10 kegelmantelförmig bzw. in axialer Richtung eben ist. Die Leitelemente aus Steg 23 und Nut 24 sind wie bevorzugt in einem zweiten Abschnitt 25 des Kanals 10 angeordnet, wobei der zweite Abschnitt 25 zwischen einem an den Auslass 14 angrenzenden ersten Abschnitt 26 und gegenüber liegend einem dritten Abschnitt 27 angeordnet ist, der an den Einlass 19 aufspannt. In dieser Ausführungsform verjüngen sich die Radien der Innenfläche und der Außenfläche, die den Kanal 10 im zweiten Abschnitt 25 begrenzen, so dass sich der Radius des zweiten Abschnitts 25 in Richtung auf die Spitzenöffnung 15 verringert. Der erste Abschnitt 26 und der dritte Abschnitt 27, zwischen denen der zweite Abschnitt 25 angeordnet ist, weisen jeweils kegelmantelförmige bzw. in axialer Richtung ebene Flächen auf.

Im Herstellungsverfahren wird eine erste Polymermischung durch eine erste Einlassöffnung 21, optional zusätzlich eine zweite Polymermischung, die eine Außenschicht des Mantels bildet, durch eine zweite Einlassöffnung 22 in die Zuleitung 20 geführt. Bei Zuführung einer Polymermischung oder zweier konzentrischer Polymermischung durch die Zuleitung 20 in den Einlass 19 des Kanals 10 der Düse wird die Polymermischung bzw. die zwei konzentrischen Polymermischungen durch einen sich verjüngenden Kanal 10 geführt und durch zumindest ein darin angeordnetes, in einem Winkel gegen die Längsmittelebene des Kanals 10 angeordnetes Leitelement zumindest abschnittsweise in einem Winkel gegen die Längsmittelebene des Kanals 10 geführt. Der Winkel, in dem das zumindest eine Leitelement angeordnet ist, beträgt z.B. zumindest 5°, bevorzugter zumindest 30°. Vorzugsweise wird die Polymermischung bzw. die zwei konzentrischen Polymermischungen in dem Kanal 10 um zumindest eine vollständige Drehung um die Längsachse des Kanals 10 geführt.

Wie anhand der zweiten Einlassöffnung 22 gezeigt, kann die Düse weitere Einlassöffnungen aufweisen, die jeweils eine Polymermischung für eine weitere Schicht des Mantels bilden. Die zumindest eine Polymermischung wird durch die Zuleitung 20 durch den Einlass 19 in den Kanal 10 geführt und dort mittels der zumindest einen Leiteinrichtung, vorzugsweise einen Steg 23 und/oder eine Nut 24, die in einem Winkel zur Längsachse 16 angeordnet sind, zumindest für einen Anteil des Querschnitts des Kanals 10 in diesen Winkel zur Längsachse 16 bewegt, vorzugsweise um eine zumindest anteilige, bevorzugter um zumindest eine vollständige Drehung um die Längsachse 16, insbesondere spiralförmig. Nach Durchtritt durch den Auslass 14 wird die zumindest eine Polymermischung auf die aus der Spitzenöffnung 15 herausgeführten Elemente des Kabels, insbesondere Adern, aufgetragen und bildet z.B. die Innenfläche 6 des Mantels und wird anschließend zur Formung der Außenfläche 5 durch die Düsenöffnung 18 bewegt.

Figur 10 zeigt abschnittsweise eine alternative Ausführungsform der Düse, bei der die Leitelemente ebenfalls aus regelmäßig um den Radius des Kanals 10 angeordneten Stegen 23 und Nuten 24 bestehen, jedoch in einem zweiten Kanalabschnitt 25 mit einem Querschnitt mit konstantem Radius, wobei insbesondere die Außenfläche des Kanals 10 im zweiten Abschnitt 25 einen konstanten Radius aufweist. Der Radius des zwischen dem zweiten Kanalabschnitt 25 und dem Auslass 14 angeordneten ersten Abschnitts 26 verjüngt sich zum Auslass 14 bzw. zur Spitzenöffnung 15. Der an den zweiten Abschnitt 25 angrenzende erste Abschnitt 26 weist einen sich zum Auslass 14 bzw. zur Spitzenöffnung 15 verringernden Radius auf und der gegenüberliegend angrenzende dritte Abschnitt 27 weist einen sich vom Einlass 19 konstanten oder sich verringernden Radius auf.

Figur 10 zeigt beispielhaft, dass die Spitze zweiteilig sein kann und einen Einsatz aufweisen kann, dessen Oberfläche einen Teil des Kanals begrenzt, z.B. in dessen ersten Abschnitt 26.

### Beispiel: Mechanische Festigkeit des Mantels

Ein erfindungsgemäßes dreiadriges Kabel mit einem Mantel aus einer Innenschicht und einer Außenschicht, beide aus derselben Polymermischung, unterschiedlich eingefärbt, auf Basis von PVC wurde mit einer Düse mit Leitelementen hergestellt, wie schematisch in Figur 8 dargestellt. Die Schichten bildeten eine Grenzschicht, deren Radius entsprechend der Anzahl von Leitelementen zwischen einem radialen Minimum und einem radialen Maximum alternierte. Dieser Querschnitt der Grenzschicht lief spiralig um die Längsachse des Kabels. Auch die Fließnaht, sofern von außen sichtbar, lief spiralig in der Außenfläche des Mantels.

Zum Vergleich wurde ein Kabel mit zweischichtigem Mantel mit denselben Polymermischungen mit einer konventionellen Extruderdüse hergestellt. Die Gesamtdicke des Mantels und die Anteile der Polymermischungen der Außenschicht und der Innenschicht waren identisch. Dieser Mantel zeigte eine Grenzfläche mit kreisförmigem Querschnitt und eine längs verlaufende Fließnaht in der Außenfläche.

Von beiden Kabeln wurden die Zugfestigkeiten der Mäntel an je 5 Probestücken bestimmt:

**Tabelle 1: Zugfestigkeit in N/mm²**

| Zugversuch Nr. | 1 | 2 | 3 | 4 | 5 |
|---|---|---|---|---|---|
| Erfindungsgemäßer Mantel: | 5,59 | 5,32 | 5,38 | 5,64 | 5,09 |
| Vergleichsmantel: | 4,85 | 4,59 | 4,87 | 4,74 | 4,59 |

Die gemessenen Zugspannungen zeigen auch bei der Streuung der Messwerte, dass der erfindungsgemäße Mantel bei gleicher Gesamtdicke und gleichen Masseanteilen von Außenschicht und Innenschicht eine höhere mechanische Festigkeit aufweist. Der Vergleichsmantel brach jeweils an der Fließnaht.

| | | | |
|---|---|---|---|
| Bezugszeichenliste: | | 14 | Auslass |
| 1 | Außenschicht | 15 | Spitzenöffnung |
| 2 | Innenschicht | 16 | Längsachse |
| 3 | Grenzfläche | 17 | Führungsbohrung |
| 4 | Hinterschneidung | 18 | Düsenöffnung |
| 5 | Außenfläche | 19 | Einlass |
| 6 | Innenfläche | 20 | Zuleitung |
| 7 | radialer Abschnitt der Grenzfläche | 21 | erste Einlassöffnung |
| 8 | ringförmiger Querschnitt aus | 22 | zweite Einlassöffnung |
| | Polymermischung der Außenschicht | 23 | Steg |
| 9 | bereichsweise Einmischung | 24 | Nut |
| 10 | Kanal | 25 | zweiter Abschnitt |
| 11 | Spitzenoberfläche | 26 | erster Abschnitt |
| 12 | Spitze | 27 | dritter Abschnitt |
| 13 | Innenfläche | | |

## Patentansprüche

1. Kabel mit zumindest einer Ader, die von einem Mantel mit einer Innenschicht und einer Außenschicht umfasst ist, wobei zwischen der Außenschicht (1) und der Innenschicht (2) eine Grenzfläche (3) gebildet ist, deren Radius parallel zur Längsachse des Kabels zwischen einem radialen Minimum und einem radialen Maximum alterniert, **dadurch gekennzeichnet, dass** eine längs des Kabels verlaufende Fließnaht des Mantels in einem Winkel zu der sich von der Längsachse (16) des Kabels erstreckenden Längsmittelebene des Kabels von zumindest 1° ausgerichtet ist.

2. Kabel nach Anspruch 1, **dadurch gekennzeichnet, dass** die längs des Kabels verlaufende Fließnaht des Mantels spiralförmig um die Längsachse des Kabels angeordnet ist.

3. Kabel nach einem der voranstehenden Ansprüche, **dadurch gekennzeichnet, dass** der Mantel auf einem Innenmantel mit zylindrischem Außenumfang, einer Wicklung und/oder einer Schirmung aufliegt.

4. Kabel nach einem der voranstehenden Ansprüche, **dadurch gekennzeichnet, dass** die Außenschicht (1) und die Innenschicht (2) einander entlang der Grenzfläche (3) kontaktieren, die in radialer Richtung Hinterschneidungen (4) aufweist.

5. Kabel nach einem der voranstehenden Ansprüche, **dadurch gekennzeichnet, dass** die Grenzfläche (3) senkrecht zur Längsachse des Kabels einen Querschnitt mit regelmäßig entlang des Radius angeordneten radialen Abschnitten (7) aufweist, in denen die Grenzfläche (3) abschnittsweise über und unter einen kreisförmigen Querschnitt ragt.

6. Kabel nach einem der voranstehenden Ansprüche, **dadurch gekennzeichnet, dass** die Grenzfläche (3) abschnittsweise einen sichelförmigen Querschnitt hat.

7. Kabel nach einem der voranstehenden Ansprüche, **dadurch gekennzeichnet, dass** die Außenschicht (1) angrenzend an ihre Außenfläche (5) einen Bereich mit ringförmigem Querschnitt (8) aufweist, der aus der Polymermischung der Außenschicht (1) besteht und die Polymermischung der Außenschicht (1) anteilig über die Grenzfläche in die Polymermischung der Innenschicht (2) eingemischt ist.

8. Kabel nach einem der voranstehenden Ansprüche, hergestellt durch Extrusion einer Polymermischung für einen Mantel um zumindest eine Ader durch einen Kanal (10), **dadurch gekennzeichnet, dass** die Polymermischung in dem Kanal (10) in zumindest einem Anteil einer Schichtdicke in einem Winkel von zumindest 1° zur Längsmittelebene des Kanals (10) geführt wird.

9. Kabel nach einem der voranstehenden Ansprüche, **dadurch gekennzeichnet, dass** zwischen der Außenschicht (1) und der Innenschicht (2) zumindest eine Zwischenschicht angeordnet ist.

10. Kabel nach einem der voranstehenden Ansprüche, **dadurch gekennzeichnet, dass** die Außenschicht (1) ausschließlich durch Kraftschluß und/oder Formschluß mit der Innenschicht (2) verbunden ist.

11. Kabel nach einem der voranstehenden Ansprüche, **dadurch gekennzeichnet, dass** der Mantel aus einer Schicht besteht und die längs des Kabels verlaufende Fließnaht des Mantels spiralförmig um die Längsachse des Kabels angeordnet ist.

12. Verfahren zur Herstellung eines Kabels mit zumindest einer von einem Mantel umfassten Ader, durch Extrusion zumindest einer Polymermischung für einen Mantel um zumindest eine Ader durch einen Kanal (10), **dadurch gekennzeichnet, dass** die Polymermischung in dem Kanal (10) in zumindest einem Anteil ihrer Schichtdicke in einem Winkel zur Längsmittelebene des Kanals (10) über zumindest ein Leitelement (23, 24) geführt wird.

13. Verfahren nach Anspruch 12, **gekennzeichnet dadurch, dass** die Ader von einem Mantel mit einer Innenschicht und einer Außenschicht umfasst ist und durch Extrusion einer Polymermischung für die Innenschicht und darauf konzentrisch angeordnet einer Polymermischung für die Außenschicht.

14. Verfahren nach Anspruch 12 oder 13, **gekennzeichnet dadurch, dass** sich der Kanal (10) verjüngt.

15. Verfahren nach einem der Ansprüche 12 bis 14, **dadurch gekennzeichnet, dass** der Winkel, in dem die Polymermischung zur Längsmittelebene des Kanals (10) geführt wird, 1° bis 89° zur Längsmittelebene des Kanals (10) beträgt.

16. Extruderdüse zur Verwendung bei der Herstellung eines Kabels, die einen sich von einem Einlass (19) zu einem ringförmigen Auslass (14) erstreckenden Kanal mit ringförmigem Querschnitt aufweist, wobei der Auslass (14) zwischen der Spitzenöffnung (15) der Führungsbohrung (17) einer Spitze (12) und der Düsenöffnung (13) der Extruderdüse mündet, **dadurch gekennzeichnet, dass** in dem Kanal (10) zumindest ein Führungselement in einem Winkel gegen die Längsmittelebene der Extruderdüse angeordnet ist.

17. Extruderdüse nach Anspruch 16, **dadurch gekennzeichnet, dass** sich der Abschnitt des Kanals, über den sich das Leitelement (23, 24) erstreckt, verjüngt.

18. Extruderdüse nach Anspruch 16 oder 17, **dadurch gekennzeichnet, dass** das Führungselement einen Steg (23) aufweist, der sich über zumindest 30% des Querschnitts des Kanals (10) erstreckt.

19. Extruderdüse nach einem der Ansprüche 16 bis 18, **dadurch gekennzeichnet, dass** das Führungselement auf der Wand (13) des Kanals (10) mit kleinerem Radius angeordnet ist.

20. Extruderdüse nach einem der Ansprüche 16 bis 19, **dadurch gekennzeichnet, dass** zumindest zwei Führungselemente symmetrisch zur Längsachse der Extruderdüse angeordnet sind und sich die Führungselemente um einen Anteil von 5° bis 360° eines vollständigen radialen Umlaufs um die Längsachse der Extruderdüse erstrecken.

## Claims

1. Cable with at least one insulated conductor which is surrounded by a sheath consisting of an inner layer and an outer layer, there being formed between the outer layer (1) and the inner layer (2) an interface (3), of which the radius parallel to the longitudinal axis of the cable alternates between a radial minimum and a radial maximum, **characterized in that** a sheath joint line running along the cable is oriented at an angle of at least 1° to the cable longitudinal mid-plane extending from the longitudinal axis (16) of the cable.

2. Cable according to Claim 1, **characterized in that** the sheath joint line running along the cable is arranged spirally around the longitudinal axis of the cable.

3. Cable according to one of the preceding claims, **characterized in that** the sheath lies on an inner sheath having a cylindrical outer circumference, a winding and/or a shielding.

4. Cable according to one of the preceding claims, **characterized in that** the outer layer (1) and the inner layer (2) contact one another along the interface (3) which has undercuts (4) in the radial direction.

5. Cable according to one of the preceding claims, **characterized in that** the interface (3) has, perpendicularly to the longitudinal axis of the cable, a cross section with radial portions (7) which are arranged regularly along the radius and in which the interface (3) projects partially above and below a circular cross section.

6. Cable according to one of the preceding claims, **characterized in that** the interface (3) has partially a sickle-shaped cross section.

7. Cable according to one of the preceding claims, **characterized in that** the outer layer (1) has adjacently to its outer face (5) a region of annular cross section (8) which consists of the polymer mix of the outer layer (1), and the polymer mix of the outer layer (1) is mixed pro rata into the polymer mix of the inner layer (2) via the interface.

8. Cable according to one of the preceding claims, produced by the extrusion of a polymer mix for a sheath around at least one conductor through a duct (10), **characterized in that** the polymer mix is guided in the duct (10) in at least a fraction of a layer thickness at an angle of at least 1° to the longitudinal mid-plane of the duct (10).

9. Cable according to one of the preceding claims, **characterized in that** at least one intermediate layer is arranged between the outer layer (1) and the inner layer (2).

10. Cable according to one of the preceding claims, **characterized in that** the outer layer (1) is connected to the inner layer (2) solely non-positively and/or positively.

11. Cable according to one of the preceding claims, **characterized in that** the sheath consists of one layer, and the sheath joint line running along the cable is arranged spirally around the longitudinal axis of the cable.

12. Method for producing a cable with at least one conductor, surrounded by a sheath, by the extrusion of at least one polymer mix for a sheath around at least one conductor through a duct (10), **characterized in that** the polymer mix is guided in the duct (10) in at least a fraction of its layer thickness at an angle to the longitudinal mid-plane of the duct (10) via at least one guide element (23, 24).

13. Method according to Claim 12, **characterized in that** the conductor is surrounded by a sheath with an inner layer and with an outer layer and by the extrusion of a polymer mix for the inner layer and of a polymer mix, arranged concentrically thereon, for the outer layer.

14. Method according to Claim 12 or 13, **characterized in that** the duct (10) tapers.

15. Method according to one of Claims 12 to 14, **characterized in that** the angle at which the polymer mix is guided to the longitudinal mid-plane of the duct (10) amounts to 1° to 89° to the longitudinal mid-plane of the duct (10).

16. Extruder die for use in the production of a cable, which die has a duct of annular cross section extending from an inlet (19) to an annular outlet (14), the outlet (14) issuing between the tip orifice (15) of the guide bore (17) of a tip (12) and the die orifice (13) of the extruder die, **characterized in that** at least one guidance element is arranged in the duct (10) at an angle to the longitudinal mid-plane of the extruder die.

17. Extruder die according to Claim 16, **characterized in that** portion of the duct over which the guide element (23, 24) extends tapers.

18. Extruder die according to Claim 16 or 17, **characterized in that** the guidance element has a web (23) which extends over at least 30% of the cross section of the duct (10).

19. Extruder die according to one of Claims 16 to 18, **characterized in that** the guidance element is arranged on the wall (13) of the duct (10) having a smaller radius.

20. Extruder die according to one of Claims 16 to 19, **characterized in that** at least two guidance elements are arranged symmetrically to the longitudinal axis of the extruder die, and the guidance elements extend around the longitudinal axis of the extruder die by the amount of a fraction of 5° to 360° of one complete radial revolution.

## Revendications

1. Câble comprenant au moins un fil qui est entouré par une gaine ayant une couche intérieure et une couche extérieure, une surface limite (3) étant formée entre la couche extérieure (1) et la couche intérieure (2), dont le rayon alterne parallèlement à l'axe longitudinal du câble entre un minimum radial et un maximum radial, **caractérisé en ce qu'**une ligne de soudure de la gaine, s'étendant le long du câble, est orientée suivant un angle d'au moins 1° par rapport au plan médian longitudinal du câble, s'étendant depuis l'axe longitudinal (16) du câble.

2. Câble selon la revendication 1, **caractérisé en ce que** la ligne de soudure de la gaine, s'étendant le long du câble, est disposée en spirale autour de l'axe longitudinal du câble.

3. Câble selon l'une quelconque des revendications précédentes, **caractérisé en ce que** la gaine repose sur une gaine intérieure avec une périphérie extérieure cylindrique, avec un enroulement et/ou un blindage.

4. Câble selon l'une quelconque des revendications précédentes, **caractérisé en ce que** la couche extérieure (1) et la couche intérieure (2) viennent en contact l'une avec l'autre le long de la surface limite (3) qui présente des contre-dépouilles (4) dans la direction radiale.

5. Câble selon l'une quelconque des revendications précédentes, **caractérisé en ce que** la surface limite (3) présente, perpendiculairement à l'axe longitudinal du câble, une section transversale avec des portions radiales (7) disposées régulièrement le long du rayon, dans lesquelles la surface limite (3) pénètre en partie au-dessus et en dessous d'une section transversale circulaire.

6. Câble selon l'une quelconque des revendications précédentes, **caractérisé en ce que** la surface limite (3) présente en partie une section transversale en forme de croissant.

7. Câble selon l'une quelconque des revendications précédentes, **caractérisé en ce que** la couche extérieure (1) présente, à côté de sa surface extérieure (5), une région de section transversale annulaire (8) qui se compose du mélange de polymère de la couche extérieure (1) et le mélange de polymère de la couche extérieure (1) est incorporé en mélange dans une certaine proportion sur la surface limite dans le mélange de polymère de la couche intérieure (2).

8. Câble selon l'une quelconque des revendications précédentes, fabriqué par extrusion d'un mélange de polymère pour une gaine autour d'au moins un fil à travers un canal (10), **caractérisé en ce que** le mélange de polymère dans le canal (10) est guidé dans au moins une certaine proportion d'une épaisseur de couche suivant un angle d'au moins 1° par rapport au plan médian longitudinal du canal (10).

9. Câble selon l'une quelconque des revendications précédentes, **caractérisé en ce qu'**entre la couche extérieure (1) et la couche intérieure (2) est disposée au moins une couche intermédiaire.

10. Câble selon l'une quelconque des revendications précédentes, **caractérisé en ce que** la couche extérieure (1) est connectée exclusivement par engagement par force et/ou par correspondance de formes avec la couche intérieure (2).

11. Câble selon l'une quelconque des revendications précédentes, **caractérisé en ce que** la gaine se compose d'une couche et la ligne de soudure de la gaine, s'étendant le long du câble, est disposée en spirale autour de l'axe longitudinal du câble.

12. Procédé de fabrication d'un câble comprenant au moins un fil entouré par une gaine, par extrusion d'au moins un mélange de polymère pour une gaine autour d'au moins un fil à travers un canal (10), **caractérisé en ce que** le mélange de polymère dans le canal (10) est guidé dans au moins une certaine proportion de son épaisseur de couche suivant un angle par rapport au plan médian longitudinal du canal (10) par le biais d'au moins un élément de guidage (23, 24).

13. Procédé selon la revendication 12, **caractérisé en ce que** le fil est entouré par une gaine ayant une couche intérieure et une couche extérieure et par l'extrusion d'un mélange de polymère pour la couche intérieure et, disposé concentriquement sur celle-ci, d'un mélange de polymère pour la couche extérieure.

14. Procédé selon la revendication 12 ou 13, **caractérisé en ce que** le canal (10) se rétrécit.

15. Procédé selon l'une quelconque des revendications 12 à 14, **caractérisé en ce que** l'angle suivant lequel le mélange de polymère est guidé par rapport au plan médian longitudinal du canal (10) vaut de 1° à 89° par rapport au plan médian longitudinal du canal (10).

16. Tuyère d'extrusion pour l'utilisation dans la fabrication d'un câble qui présente un canal s'étendant depuis une entrée (19) jusqu'à une sortie annulaire (14) de section transversale annulaire, la sortie (14) débouchant entre l'ouverture de pointe (15) de l'alésage de guidage (17) d'une pointe (12) et l'ouverture de tuyère (13) de la tuyère d'extrusion, **caractérisée en ce que** dans le canal (10) est disposé au moins un élément de guidage suivant un certain angle par rapport au plan médian longitudinal de la tuyère d'extrusion.

17. Tuyère d'extrusion selon la revendication 16, **caractérisée en ce que** la portion du canal sur laquelle s'étend l'élément de guidage (23, 24) se rétrécit.

18. Tuyère d'extrusion selon la revendication 16 ou 17, **caractérisée en ce que** l'élément de guidage présente une nervure (23) qui s'étend sur au moins 30 % de la section transversale du canal (10).

19. Tuyère d'extrusion selon l'une quelconque des revendications 16 à 18, **caractérisée en ce que** l'élément de guidage est disposé sur la paroi (13) du canal (10) de plus petit rayon.

20. Tuyère d'extrusion selon l'une quelconque des revendications 16 à 19, **caractérisée en ce qu'**au moins deux éléments de guidage sont disposés symétriquement par rapport à l'axe longitudinal de la tuyère d'extrusion et les éléments de guidage s'étendent suivant une proportion de 5° à 360° d'une périphérie radiale complète autour de l'axe longitudinal de la tuyère d'extrusion.
